# EUROPÄISCHE PATENTSCHRIFT

(11) **EP 1 529 584 B1**
(45) Veröffentlichungstag und Bekanntmachung des Hinweises auf die Patenterteilung: **30.08.2006**
(21) Anmeldenummer: 03025505.3
(22) Anmeldetag: 06.11.2003
(51) Int. Cl.: B23B 31/02, B23B 31/30, B23B 31/117, B23Q 11/10, B23H 9/00, B23Q 1/00

(54) **Zwischenbüchse für ein Spannfutter und Verfahren zu deren Herstellung**
Bush for a Chuck and method of its manufacture
Manchon pour un mandrin et son procédé de fabrication

(43) Veröffentlichungstag der Anmeldung: 11.05.2005
(73) Patentinhaber: Schunk GmbH & Co. KG Spann- und Greiftechnik, 74348 Lauffen (DE)
(72) Erfinder: Retzbach, Thomas, 74357 Bönnigheim (DE)
(74) Vertreter: Paul, Dieter-Alfred

(56) Entgegenhaltungen:
- EP-A- 0 972 603
- EP-A- 1 084 782
- WO-A-02/051571
- US-A- 4 657 454
- US-A- 5 028 178
- US-A- 5 329 841
- US-B1- 6 260 858
- US-B1- 6 479 782

## Beschreibung

Die vorliegende Erfindung betrifft eine Zwischenbüchse zum Einsetzen in die zentrale Aufnahme eines Spannfutters nach dem Oberbegriff von Anspruch 1. Eine solche Zwischenbüchse ist aus dem Dokument WO 02/051571 A1 bekannt. Des weiteren betrifft die Erfindung ein Spannfutter mit einem Futterkörper, in dem eine zentrale Aufnahme für den Schaft eines zu spannenden Werkzeugs ausgebildet ist, und einem Kühlmittelzuführkanal, der sich zwischen dem maschinenseitigen Ende des Futterkörpers und der Aufnahme erstreckt, um dem maschinenseitigen Ende eines in die Aufnahme eingeschobenen Werkzeugs ein Kühlmittel zuzuführen, wobei in die Aufnahme eine Zwischenbüchse eingesetzt ist. Schließlich betrifft die Erfindung ein Verfahren zur Herstellung einer Zwischenbüchse, nach dem Oberbegriff von Anspruch 6.

Spannfutter der vorgenannten Art sind in unterschiedlichen Ausführungsformen bekannt und werden in der Praxis eingesetzt, um einen Werkzeugschaft wie beispielsweise einen Bohrer- oder Fräserschaft in der Arbeitsspindel einer entsprechenden Werkzeugmaschine zu fixieren. Bei den bekannten Spannfuttern, welche beispielsweise als Dehnspannfutter oder als Wärmeschrumpffutter ausgebildet sind, ist der Spannweg sehr begrenzt, so daß die Durchmesser der Aufnahme einerseits und des zu spannenden Werkzeugs andererseits aufeinander abgestimmt werden müssen.

Um mit einem Spannfutter auch Werkzeuge zu spannen, die einen wesentlich kleineren Durchmesser als die Spannfutteraufnahme besitzen, werden in der Praxis häufig sogenannte Zwischenbüchsen eingesetzt, welche in die Spannfutteraufnahme eingeschoben werden, um den Spanndurchmesser zu verringern (siehe WO 02 051571 A1). Diese Zwischenbüchsen besitzen einen zylindrischen Körper mit einer zentralen Spannbohrung, der entlang seines Außenumfangs verteilt mehrere radiale Schlitze, die sich über die gesamte Länge der Zwischenbüchse erstrecken, aufweist. Die Schlitze dienen dabei dazu, der Zwischenbüchse die erforderliche Elastizität zur Übertragung der Spannkräfte zu geben.

Die bekannten Zwischenbüchsen werden in der Regel durch spanende Bearbeitungsgänge hergestellt. So werden die Büchsenkörper üblicherweise zunächst gedreht und anschließend geschliffen und werden die Schlitze in den Büchsenkörper ebenfalls zerspanend mittels Sägen oder Schleifen eingebracht. Diese Art der Herstellung ist teuer und bringt außerdem aufgrund der Vielzahl von unterschiedlichen Fertigungsgängen lange Durchlaufzeiten mit sich. Dies gilt insbesondere, wenn die Spannbohrungen sehr klein sind, beispielsweise einen Durchmesser von weniger als 6 mm haben, oder die Anforderungen an die Rundlaufgenauigkeit sehr hoch sind, beispielsweise die Rundlauftoleranzen unterhalb von 0,005 mm liegen sollen.

Ein weiteres Problem kann hinzutreten, wenn die Zwischenbüchsen zum Spannen von Werkzeugen mit einer inneren Kühlmittelzufuhr eingesetzt werden, da in diesem Fall aufwendige Abdichtmaßnahmen ergriffen werden müssen, um zu verhindern, daß das über den Futterkörper zugeführte Kühl- und/oder Schmiermittel in die radialen Schlitze eintritt und an dem Werkzeug vorbei durch die Schlitze strömt und aus dem Futterkörper als Leckage austritt.

Aufgabe der vorliegenden Erfindung ist es daher, eine zwischenbüchse der eingangs genannten Art anzugeben, die einfach in der Herstellung ist, eine hohe Fertigungsgenauigkeit insbesondere hinsichtlich der erreichbaren Rundlauftoleranzen ermöglicht und außerdem die Gefahr von Leckagen eines Kühlmittelfluids verringert. Des weiteren soll ein Spannfutter mit einer solchen Zwischenbüchse und ein Verfahren zur Herstellung von dieser angegeben werden.

Gemäß der vorliegenden Erfindung ist diese Aufgabe bei einer Zwischenbüchse der eingangs genannten Art durch die kennzeichnenden Merkmale von Anspruch 1 gelöst.

Erfindungsgemäß werden die Außenkonturen mit den Schlitzen und die zentrale Spannbohrung der Zwischenbüchse durch einen Erodiervorgang in einer einzigen Maschinenaufspannung hergestellt. Aufgrund dieses Herstellungsverfahrens ist es möglich, die erfindungsgemäßen Zwischenbüchsen automatisch herzustellen. Da die Herstellung in einer Maschinenaufspannung erfolgt, sind außerdem sehr hohe Fertigungsgenauigkeiten realisierbar. Hier bringt der Durchgangsschlitz den Vorteil mit sich, daß die Zwischenbüchse einseitig offen ist, so daß im Betrieb nur kleinste Spannkraftverluste auftreten. Dabei kann der Durchgangsschlitz beim Erodiervorgang zwischen der Bearbeitung der Außen- und der Innenkontur hergestellt werden, so daß auf die Herstellung einer Vorbohrung verzichtet werden kann. Auch können sehr dünnwandige Wandstärken von < 1,0 mm mit sehr hoher Genauigkeit und geringen Bearbeitungskosten hergestellt werden.

Erfindungswesentlich ist weiterhin, daß in dem Fall, daß Werkzeuge mit innerer Kühlmittelzufuhr gespannt werden sollen, auf aufwendige Abdichtungsmaßnahmen zumindest weitgehend verzichtet werden, da die erodierten Schlitze bei den Zwischenbüchsen gemäß beiden Aspekten der Erfindung eine so geringe Breite besitzen, daß der Strömungswiderstand in den Schlitzen so groß ist, daß eine Leckage des Kühl- und/oder Schmiermittels durch die Schlitze weitgehend ausgeschlossen werden kann. Werden dennoch aus Sicherheitsgründen zusätzliche Abdichtmedien wie beispielsweise plastische Massen verwendet, so verhindert die geringe Breite der Schlitze das Herausextrudieren der Abdichtmassen aus den Schlitzen. Das selbe trifft natürlich auch bei Verwendung fester Stoffe wie z.B. O-Ringschnüren zu, die nun auch Kühlmitteldrücken weit über 100 bar standhalten können. Schließlich bietet die Erfindung den Vorteil, daß sich Schmutz in den schmalen Schlitzen nur schlecht ansammeln kann. Es hat sich als ausreichend erwiesen, wenn die Schlitzbreite ≤ 0,6 mm ist. Bevorzugter Massen sollten die (Durchgangs-)Schlitze jedoch eine maximale Breite von 0,35 mm, insbesondere eine maximale Breite von 0,3 mm besitzen.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: im Längsschnitt eine erste Ausführungsform eines als Wärmeschrumpffutter ausgebildeten Spannfutters gemäß der vorliegenden Erfindung,
- Figur 2: das Spannfutter aus Figur 1 in Vorderansicht,
- Figur 3: eine Zwischenbüchse des Spannfutters aus Figur 1 in perspektivischer, vergrößerter Darstellung,
- Figur 4: die Spannbüchse aus Figur 3 in Vorderansicht,
- Figur 5: die Zwischenbüchse im Längsschnitt entlang der Linie A-A in Figur 4,

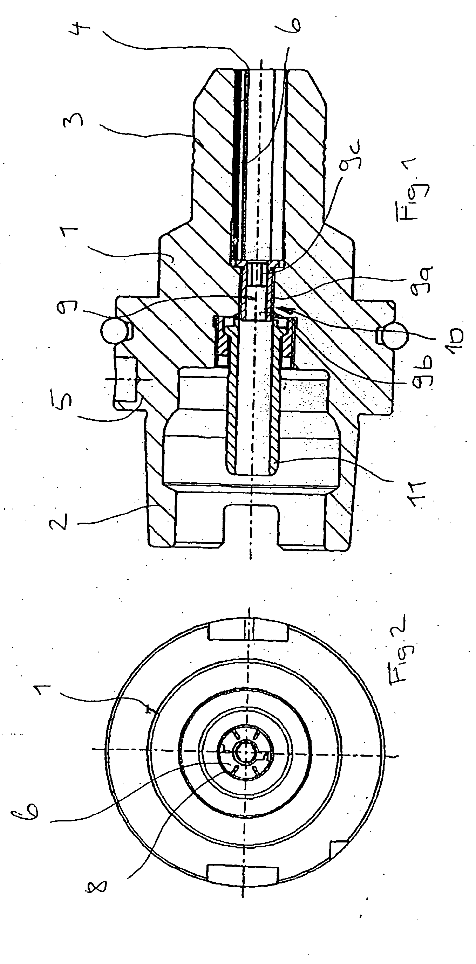

In den Figuren 1 und 2 ist eine Ausführungsform eines Spannfutters gemäß der vorliegenden Erfindung im Längsschnitt und in Vorderansicht dargestellt. Dieses Spannfutter besitzt einen Futterkörper 1 aus einem formsteifen Material, der an seinem einen Endbereich in an sich bekannter Weise einen Befestigungskonus 2 zur Einspannung an einer drehangetriebenen Arbeitsspindel einer Werkzeugmaschine aufweist. An dem anderen Ende des Futterkörpers 1 ist ein Anschlußschaft 3 mit einer zentralen Aufnahme 4 vorgesehen, in die ein zylindrischer Schaft eines Werkzeugs wie beispielsweise eines Bohrers oder Fräsers eingeschoben werden kann, und zwischen dem Befestigungskonus 2 und dem Anschlußschaft 3 liegt ein Mittelteil 5 vergrößerten Durchmessers.

Das dargestellte Spannfutter ist als Wärmeschrumpffutter ausgebildet. Alternativ ist jedoch auch eine Ausbildung als Dehnspannfutter möglich, wobei das Spannfutter dann in an sich bekannter Weise im Bereich des Anschlußschaftes 3 einen Dehnspannmechanismus aufweist.

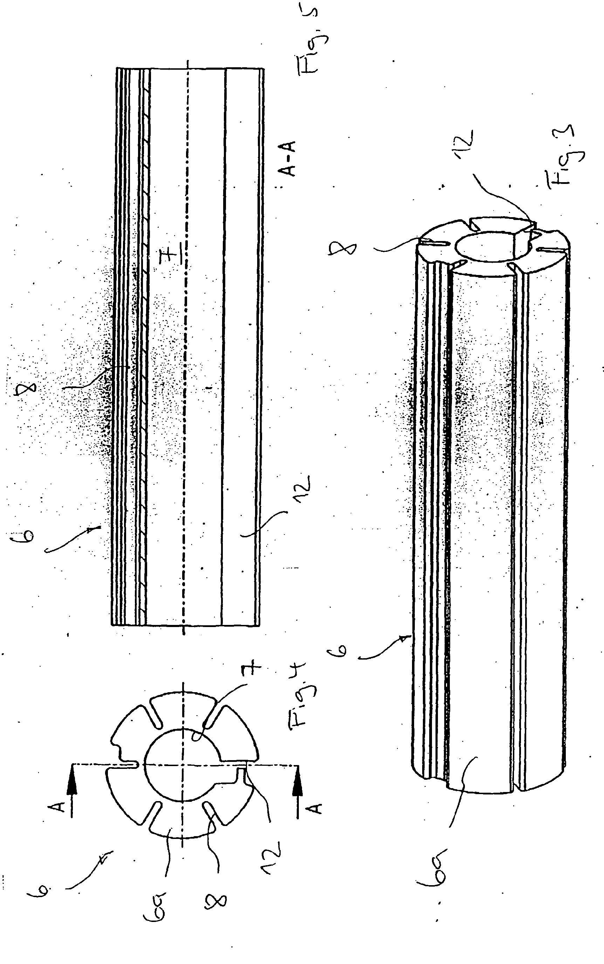

Um mit dem Spannfutter 1 auch Schäfte von Werkzeugen spannen zu können, deren Durchmesser wesentlich kleiner als der Durchmesser der Aufnahme 4 ist, ist in die Aufnahme 4 eine Zwischenbüchse 6 eingesetzt. Diese Zwischenbüchse 6 besitzt einen zylindrischen Körper 6a, dessen Außendurchmesser dem Durchmesser der Aufnahme 4 entspricht und der eine als Durchgangsbohrung ausgebildete Spannbohrung 7 mit einem Durchmesser aufweist, welcher etwa dem Durchmesser der zu spannenden Werkzeuge entspricht und unter 6 mm liegen kann. Wie insbesondere in den Figuren 3 bis 5 gut zu erkennen ist, weist die Zwischenbüchse 6 entlang ihres Außenumfangs verteilt radiale Schlitze 8 auf, die über die gesamte Länge der Zwischenbüchse 6 verlaufen und sich vom Außenumfang der Zwischenbüchse 6 in Richtung der Spannbohrung 7 erstrecken, wobei zwischen den Schlitzen 8 und der Spannbohrung 7 nur noch sehr schmale Materialstege verbleiben.

Zur axialen Positionierung der Zwischenbüchse 6 bzw. eines in diese Zwischenbüchse 6 eingeschobenen Werkzeugs ist in der Aufnahme 4 ein Axialanschlagelement vorgesehen, das im Futterkörper 1 axial verstellbar gehalten ist. Konkret ist das axiale Anschlagelement in der dargestellten Ausführungsform als Voreinstellschraube 9 ausgebildet, die in eine sich an die Aufnahme 4 anschließende axiale Durchgangsbohrung 10 des Futterkörpers 1 eingeschraubt ist, wozu sie im Bereich ihres Schafts mit einem Außengewindeabschnitt 9a versehen ist. Des weiteren weist die Voreinstellschraube 9 eine Durchgangsbohrung 9b auf. Diese ist an ihrem aufnahmeseitigen Endbereich in Form eines Innensechskants 9c ausgebildet, so daß die Voreinstellschraube 9 durch einen Innensechskantschlüssel verdreht und auf diese Weise axial verstellt werden kann.

Bei den zu spannenden Werkzeugen handelt es sich in der Regel um Werkzeuge mit einer inneren Kühlmittelzufuhr, welche eine zentrale Durchgangsbohrung aufweisen, die sich vom aufnahmeseitigen Ende bis zur Schneide des Werkzeugs erstreckt, um der Werkzeugschneide ein Kühlund/oder Schmiermittel zuzuführen. Dieses Kühl- und/oder Schmiermittel, das beispielsweise ein Luft/Öl-Gemisch in Form eines Ölnebels sein kann, wird dem maschinenseitigen Ende des Werkzeugs über einen in dem Futterkörper 1 ausgebildeten Kühlmittelkanal zugeführt, welcher im wesentlichen von einem Kühlmittelzuführrohr 11, das sich zwischen einem Übergabeelement der Arbeitsspindel und der Voreinstellschraube 9 erstreckt, und der Durchgangsbohrung 9b der Voreinstellschraube 9 gebildet wird.

Um zu verhindern, daß das zugeführte Kühl- und/oder Schmiermittel an einem in die Spannbohrung 7 der Zwischenbüchse 6 eingesetzten Werkzeug vorbei über die radialen Schlitze 8 der Zwischenbüchse 6 strömen und als Leckage aus dem Spannfutter austreten kann, ist die Breite der Schlitze 8 so klein dimensioniert, daß ein Eintreten des Kühl- und/oder Schmiermittels in die Schlitze 8 zumindest im wesentlichen verhindert wird, da der Strömungswiderstand in den Schlitzen 8 für das Kühlmittel zu groß ist. Damit kann auf weitere Abdichtmedien in den Schlitzen zum Teil ganz verzichtet werden kann. Werden Dichtmedien wie z.B. plastische Massen verwendet, so verhindert die geringe Breite der Schlitze 8 das Herausextrudieren dieser Dichtmassen. Das gleiche trifft natürlich auch bei der Verwendung fester Stoffe wie z.B. O-Ringschnüre zu, die nun auch Kühlmitteldrücken weit über 100 bar standhalten können.

Die Schlitze 8, die eine maximale Breite von 0,6 mm und insbesondere eine maximale Breite von 0,35 mm besitzen, werden in einem Drahterodierverfahren hergestellt. Konkret ist gemäß der vorliegenden Erfindung vorgesehen, daß die gesamte Zwischenbüchse 6 aus einem Rohling in einem Erodiervorgang hergestellt wird. Wie insbesondere in der Figur 6 schematisch dargestellt ist, wird dabei zunächst die Außenkontur der Zwischenbüchse 6 mit den Schlitzen 8 hergestellt und anschließend der Erodierdraht unter Bildung eines radialen Durchgangsschlitzes 12 in der Wandung der Zwischenbüchse 6 radial nach innen geführt, um die Innenkontur herzustellen. Diese Herstellung der Zwischenbüchse 6 mittels eines Erodiervorgangs in einer Maschinenaufspannung ermöglicht es, sehr hohe Fertigungsgenauigkeiten zu erreichen, wodurch insbesondere Rundlaufprobleme vermieden werden können. Da die Zwischenbüchse 6 durchgeschlitzt wird, wird auch die Verwendung einer Startbohrung überflüssig. Dies ist insbesondere bei Spanndurchmessern unter 0,5 mm wichtig, da die Herstellungskosten damit weiter sinken.

## Patentansprüche

1. Zwischenbüchse zum Einsetzen in die zentrale Aufnahme (4) eines Spannfutters mit einem zylindrischen Körper (6a), der eine zentrale, als Durchgangsbohrung ausgebildete Spannbohrung (7) aufweist, wobei der Körper (6a) entlang seines Außenumfangs verteilt mehrere radiale Schlitze (8), die sich über die gesamte axiale Länge der Zwischenbüchse (6) erstrecken, aufweist, wobei die Schlitze (8) eine maximale Breite von 0,6 mm besitzen **dadurch gekennzeichnet, dass** die Außenkontur, die Schlitze (8) und die Spannbohrung (7) der Zwischenbüchse (6) erodiert sind und daß der Körper (6a) über seine gesamte Länge einen sich von seinem Außenumfang zum Innenumfang erstreckenden Durchgangsschlitz (12) mit einer maximalem Breite von 0,6 mm aufweist.

2. Zwischenbüchse nach Anspruch 1, **dadurch gekennzeichnet, daß** die Schlitze (8) eine maximale Breite von 0,35 mm, insbesondere eine maximale Breite von 0,5 mm besitzen.

3. Zwischenbüchse nach Anspruch 1 oder 2, **dadurch gekennzeichnet, daß** der Durchgangsschlitz (12) eine maximale Breite 0,35 mm insbesondere eine maximale Breite von 0,3 mm besitzt.

4. Spannfutter mit einem Futterkörper (1), in dem eine zentrale Aufnahme (4) für den Schaft eines zu spannenden Werkzeugs ausgebildet ist, und einem Kühlmittelzuführkanal, der sich zwischen dem maschinenseitigen Ende des Futterkörpers (1) und der Aufnahme (4) erstreckt, um dem maschinenseitigen Ende eines in die Aufnahme (4) eingeschobenen Werkzeugs ein Kühlmittel zuzuführen, wobei in die Aufnahme (4) eine Zwischenbüchse (6) eingesetzt ist, **dadurch gekennzeichnet, daß** die Zwischenbüchse (6) nach einem der Ansprüche 1 bis 3 ausgebildet ist.

5. Spannfutter nach Anspruch 4, **dadurch gekennzeichnet, daß** in die Schlitze (8) ein Dichtungsmaterial eingesetzt ist.

6. Verfahren zur Herstellung einer Zwischenbüchse (6) zum Einsetzen in die Aufnahme (4) eines Spannfutters mit einem zylindrischen Körper (6a), der eine zentrale, als Durchgangsbohrung ausgebildete Spannbohrung (7) aufweist, wobei entlang des Außenumfangs des zylindrischen Körpers (6a) verteilt mehrere radiale Schlitze, die sich über die gesamte axiale Länge der Zwischenbüchse (6) erstrecken, vorgesehen sind, **dadurch gekennzeichnet, daß** der Körper (6a) über seine gesamte Länge einen sich von seinem Außenumfang zum Innenumfang erstreckenden Durchgangsschlitz (12) aufweist, wobei die Außenkontur, die zentrale Spannbohrung (7) sowie die Schlitze (8) und/oder der Durchgangsschlitz (12) mit einer maximalen Breite von 0,6 mm durch einen Erodiervorgang in einer einzigen Maschinenaufspannung hergestellt werden.

7. Verfahren nach Anspruch 6, **dadurch gekennzeichnet, daß** die Schlitze (8) mit einer maximalen Breite von 0,3 mm hergestellt werden.

## Claims

1. An intermediary sleeve for inserting into the central receptacle (4) of a clamping chuck with a cylindrical element (6a) which has a central clamping hole (7) in the form of a through hole, the element (6a) having several radial slots (8) distributed along its outer circumference which extend over the whole axial length of the intermediary sleeve (6), the slots (8) having a maximum width of 0.6 mm, **characterised in that** the outer contour, the slots (8) and the clamping hole (7) of the intermediary sleeve (6) are spark-eroded, and that the element (6a) has a through slot (12) extending from its outer circumference to its inner circumference over its whole length, with a maximum width of 0.6 mm.

2. The intermediary sleeve according to Claim 1, **characterised in that** the slots (8) have a maximum width of 0.35 mm, and in particular a maximum width of 0.5 mm.

3. The intermediary sleeve according to Claim 1 or 2, **characterised in that** the through slot (12) has a maximum width of 0.35 mm, and in particular a maximum width of 0.3 mm .

4. A clamping chuck with a chuck element (1) in which a central receptacle (4) for the shaft of a tool to be clamped is formed, and a coolant feed duct which extends between the end of the chuck element (1) on the machine side and the receptacle (4) in order to supply a coolant to the machine side end of a tool inserted into the receptacle (4), an intermediary sleeve (6) being inserted into the receptacle (4), **characterised in that** the intermediary sleeve (6) is designed according to any of Claims 1 to 3.

5. The clamping chuck according to Claim 4, **characterised in that** a sealing material is inserted into the slots (8).

6. A method for producing an intermediary sleeve (6) for inserting into the receptacle (4) of a clamping chuck with a cylindrical element (6a) which has a central clamping hole (7) in the form of a through hole, several radial slots distributed along the outer circumference of the cylindrical element (6a) and which extend over the whole axial length of the intermediary sleeve (6) being provided, **characterised in that** the element (6a) has a through slot (12) extending from its outer circumference to the inner circumference over its whole length, the outer contour, the central clamping hole (7) and the slots (8) and/or the through slot (12) being produced with a maximum width of 0.6 mm by means of a spark erosion process in a single machine setting.

7. A method according to Claim 6, **characterised in that** the slots (8) are produced with a maximum width of 0.3 mm.

## Revendications

1. Douille intermédiaire destinée au montage dans la partie centrale de fixation (4) d'un mandrin de serrage à corps cylindrique (6a), qui présente un alésage de serrage (7) sous la forme d'un trou de passage, où le corps (6a) présente plusieurs découpages radiaux (8) distribués le long de sa circonférence extérieure et qui s'étendent sur toute la longueur de la douille intermédiaire (6), où les découpages (8) ont une largeur maxime de 0,6 mm, **caractérisée en ce que**, tant le contour extérieur que les découpages (8) et l'alésage de serrage (7) de la douille intermédiaire (6) sont érodés, et que le corps (6a) présente sur toute sa longueur, un découpage de passage (12) qui s'étend de sa circonférence extérieure à la circonférence intérieure, ayant une largeur maxime de 0,6 mm.

2. Douille intermédiaire selon la revendication 1, **caractérisée en ce que**, tous les découpages (8) ont une largeur maxime de 0,35 mm, spécialement une largeur maxime de 0,5 mm.

3. Douille intermédiaire selon la revendication 1 ou 2, **caractérisée en ce que**, le découpage de passage (12) présente une largeur maxime de 0,35 mm, spécialement une largeur maxime de 0,3 mm.

4. Mandrin de serrage avec le corps du mandrin (1) avec une partie centrale de fixation (4) pour la tige d'un outil qui va être serré, et avec un canal d'alimentation pour l'agent de refroidissement, qui s'étend entre l'extrémité du côté de la machine du corps du mandrin (1) et la partie de fixation (4), pour alimenter avec un agent de refroidissement un outil qui a été fixé dans la partie de fixation (4) de l'extrémité du côté de la machine, où dans la partie de fixation (4) a été montée une douille intermédiaire (6), **caractérisé en ce que**, la douille intermédiaire (6) est réalisée selon l'une des revendications 1 à 3.

5. Mandrin de serrage selon la revendication 4, **caractérisé en ce que**, dans tous les découpages (8), a été introduit un matériel d'étanchéité.

6. Procédé de fabrication d'une douille intermédiaire (6) pour l'introduction dans la partie de fixation (4) d'un mandrin de serrage à corps cylindrique (6a) qui présente un alésage de serrage (7) sous la forme d'un trou de passage, où le long du périmètre extérieur du corps cylindrique (6a) sont distribués plusieurs découpages radiaux (8) qui s'étendent sur toute la longueur axiale de la douille intermédiaire (6), **caractérisé en ce que**, le corps (6a) présente sur toute sa longueur un découpage de passage (12) qui s'étend de la circonférence extérieure à la circonférence intérieure, où le contour extérieur, l'alésage central de serrage (7) aussi bien que les découpages (8) et/ou le découpage de passage (12) avec une largeur maxime de 0,6 mm sont fabriqués par un procès d'érosion dans une seule fixation sur machine.

7. Procédé selon la revendication 6, **caractérisé en ce que**, les découpages (8) sont réalisés avec une largeur maxime de 0,3 mm.
